# EUROPÄISCHE PATENTSCHRIFT

(11) **EP 2 538 065 B1**
(45) Veröffentlichungstag und Bekanntmachung des Hinweises auf die Patenterteilung: **27.04.2016**
(21) Anmeldenummer: 12176902.0
(22) Anmeldetag: 29.04.2008
(51) Int. Cl.: F02M 37/22, B01D 17/04

(54) **Kraftstoffzuführeinrichtung, insbesondere für eine Brennkraftmaschine**
Fuel supply device, in particular for a combustion engine
Dispositif d'alimentation en carburant, notamment pour un moteur à combustion interne

(30) Priorität: 16.05.2007 DE 202007007120 U
(43) Veröffentlichungstag der Anmeldung: 26.12.2012
(62) Teilanmeldung aus: 08749847.3
(73) Patentinhaber: MANN + HUMMEL GMBH, 71638 Ludwigsburg (DE)
(72) Erfinder: Klein, Martin, 71634 Ludwigsburg (DE); Kiedaisch, Steffi, 4790 Lillesand (NO)

(56) Entgegenhaltungen:
- EP-A1- 0 699 462
- WO-A1-2004/082804
- DE-A1-102004 032 251
- DE-A1-102005 005 848
- GB-A- 2 273 669
- JP-A- 2004 305 921
- US-A- 3 144 407
- US-A- 3 465 883

## Beschreibung

### Technisches Gebiet

Die Erfindung betrifft eine Kraftstoffzuführeinrichtung, insbesondere für eine Brennkraftmaschine der im Oberbegriff des Anspruchs 1 angegebenen Gattung.

### Stand der Technik

In der EP 1 256 707 A2 ist ein Kraftstofffilter mit wasserabscheidenden Mitteln beschrieben. Dieser insbesondere für Dieselkraftstoff eines Verbrennungsmotors dienende Kraftstofffilter umfasst zwei Filterstufen, wobei eine erste Filterstufe zur Partikelfiltration vorgesehen ist. Diese Filterstufe besteht aus einem hydrophilen Filtermaterial, welches die Eigenschaft besitzt, im Kraftstoff fein verteiltes Wasser zu größeren Wasserteilchenelementen koaleszieren zu lassen. Der ersten Filterstufe ist eine zweite Filterstufe aus einem hydrophoben Material nachgeschaltet, wobei sich diese zweite Filterstufe koaxial innerhalb der ersten Filterstufe befindet. Diese Anordnung ist deshalb gewählt, dass der die erste Filterstufe verlassende und Wasseranteile enthaltende Kraftstoff umlenkungsfrei auf das Material der letzten Filterstufe trifft.

Für diese Art der Ausgestaltung eines Kraftstofffilters werden große Flächen des hydrophoben Materials der ersten Stufe sowie des hydrophilen Materials der zweiten Stufe benötigt. Als Nachteil wird auch angesehen, dass auch bereits koaleszierte Wasserteilchenelemente mit dem Kraftstoffstrom gegen die zweite Filterstufe bewegt werden und von der zweiten Stufe noch ein großer Anteil der Wasserelemente abgeschieden werden muss.

Eine gattungsgemäße Einrichtung in Form einer Öl/Wasser-Trenneinrichtung ist aus der JP2004305921A bekannt.

Der vorliegenden Erfindung liegt daher die Aufgabe zu Grunde, eine Kraftstoffzuführeinrichtung der gattungsgemäßen Art zu schaffen, durch die eine zuverlässige Wasserabscheidefähigkeit bei deutlich reduziertem Einsatz von koaleszierendem Material und hydrophobem Material gegeben ist.

Diese Aufgabe wird durch eine Kraftstoffzuführeinrichtung mit den Merkmalen des Anspruchs 1 gelöst.

### Offenbarung der Erfindung

Durch die Erfindung wird eine Kraftstoffzuführeinrichtung geschaffen, bei der der Wasserabscheider unabhängig vom Kraftstofffilter, das heißt dem Partikelfilter, ist, so dass jedes dieser Bauteile nach den jeweiligen Aufgaben optimal ausgelegt werden kann. Es hat sich dabei herausgestellt, dass die erforderlichen Flächen zur Wasserabscheidung und die dafür notwendigen Medien deutlich reduziert werden können und je nach Anwendungsfall die hydrophilen und hydrophoben Materialien bezüglich ihrer Fläche je nach Anwendungsfall 15-mal bis 50-mal kleiner ausgeführt werden können als bei herkömmlichen Anordnungen, in denen diese mit Partikelfiltern kombiniert sind. Eine weitere Steigerung bezüglich des Abscheidegrades ergibt sich durch die Umlenkung des Kraftstoffs zwischen der ersten und der zweiten Abscheidestufe.

Erfindungsgemäß umfasst die erste Abscheidestufe mindestens eine Lage eines hydrophilen Mediums. Dabei ist die mindestens eine Lage des hydrophilen Mediums im Wesentlichen horizontal angeordnet. Der Durchtritt des Kraftstoffs durch das hydrophile Medium erfolgt vertikal von oben nach unten, so dass die aus dem hydrophilen Medium austretenden Wassertropfen bereits in Richtung auf einen im unteren Bereich befindlichen Sammelraum bewegt werden.

Die zweite Abscheidestufe umfasst vorzugsweise mindestens eine Lage eines hydrophoben Mediums, wobei diese Lage des hydrophoben Mediums insbesondere geneigt oder im Wesentlichen vertikal angeordnet ist. Eine geneigte oder vertikale Anordnung hat dabei den Vorteil, dass die sich an der zweiten Abscheidestufe zurückgehaltenen Wassertropfen aufgrund ihrer Schwerkraft von der Fläche abfallen und ebenfalls in den darunter liegenden Sammelraum geführt werden. Die Abscheidewirkung auf dem Weg des Kraftstoffs zwischen der ersten und der zweiten Abscheidestufe kann dadurch begünstigt werden, dass die Strömung des Kraftstoffs derart umgelenkt wird, dass der Winkel des Strömungsweges 90° oder größer ist, wobei die Wasserbestandteile aufgrund ihrer größeren Massenträgheit dieser Umlenkung nicht folgen.

Erfindungsgemäß umfasst der Wasserabscheider ein im Wesentlichen zylindrisches Gehäuse, dessen Längsachse mindestens annähernd vertikal verläuft, wobei in dem Gehäuse ein Einsatzelement vorgesehen ist, das ein vertikales Rohrstück umfasst. Das Einsatzelement kann je nach Anforderungen gestaltet sein und weist vorzugsweise ein kreisringförmiges Stützgitter auf, auf dem das hydrophile Material angeordnet ist. Des Weiteren ist es zweckmäßig, dass das Rohrstück radiale Öffnungen aufweist, die von dem hydrophoben Material überdeckt sind, und wobei die radialen Öffnungen sich in einem vertikal unterhalb des Stützgitters liegenden Bereich des Rohrstückes befinden.

Eine besonders zweckmäßige Ausgestaltung des Kraftstoffablaufs wird darin gesehen, dass sich an das obere Ende des Rohrstücks der Kraftstoffablauf anschließt, der in einem Deckelteil des Gehäuses ausgebildet ist. In diesem Deckelteil ist vorzugsweise eine im Wesentlichen ringförmige Kraftstoffeintrittskammer gebildet, in die ein Eintrittskanal tangential mündet. Dadurch wird in der Kraftstoffeintrittskammer eine Strömung des Kraftstoffs erreicht, durch die das hydrophile Material der ersten Abscheidestufe im Wesentlichen gleichmäßig beaufschlagt wird. Darüber hinaus ist es zweckmäßig, dass an dem unteren Ende des Rohrstücks ein tellerförmiges Leitelement angeordnet ist, dessen Außenumfang zur Innenwandung des Gehäuses einen Abstand aufweist. Auf diese Weise wird erreicht, dass die Wasserbestandteile entlang des Leitelementes in Richtung auf den Rand geleitet werden, so dass sie durch den zur Innenwandung des Gehäuses verbleibenden Abstand in den Sammelraum eintreten können. Nach oben ist der Sammelraum im Wesentlichen durch das Leitelement von der darüber gebildeten Abscheidekammer getrennt. Zur vereinfachten Handhabung bei der Montage können das Einsatzelement und das Deckelteil eine Baueinheit bilden.

### Kurze Beschreibung der Zeichnungen

Ausführungsbeispiele der Erfindung werden nachstehend anhand der Zeichnung näher erläutert. In der Zeichnung zeigt:
- Fig. 1: eine schematische Darstellung einer Kraftstoffleitung vom Tank zu einer Brennkraftmaschine,
- Fig. 2: einen Wasserabscheider in Explosionsdarstellung,
- Fig. 3: eine perspektivische Ansicht eines Deckelteils mit einem Einsatzelement,
- Fig. 4: einen Längsschnitt durch den Wasserabscheider mit den Einzelteilen gemäß Fig. 2,

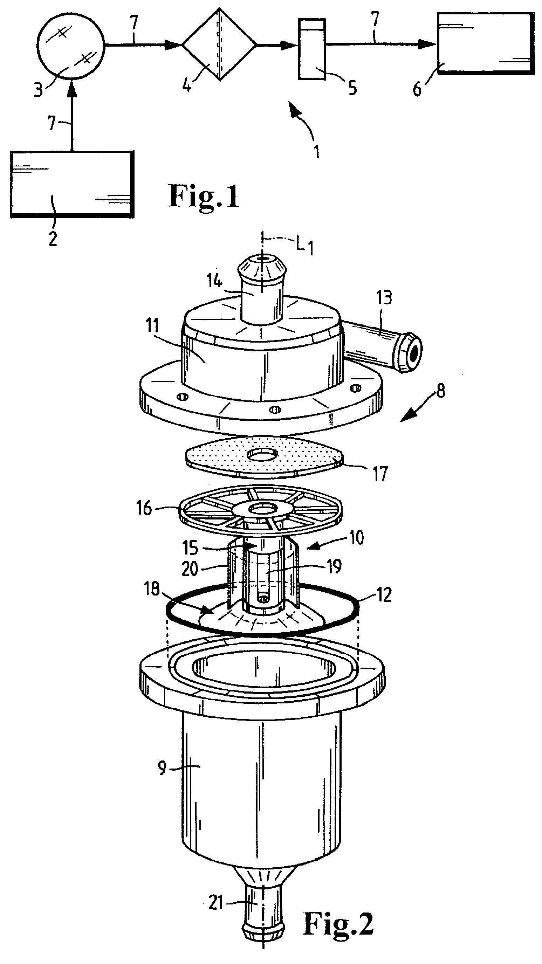

In Fig. 1 ist schematisch eine Kraftstoffzuführung 1 für eine Brennkraftmaschine 6 gezeigt, wobei in einer an einem Kraftstofftank 2 beginnenden Kraftstoffleitung 7 aufeinanderfolgend eine Kraftstoffpumpe 3, ein Kraftstofffilter 4 und ein Wasserabscheider 5 angeordnet sind. Der mittels der Kraftstoffpumpe 3 aus dem Kraftstofftank 2 geförderte Kraftstoff wird zunächst im Kraftstofffilter 4 von Partikeln gereinigt und dann einem Wasserabscheider 5 zugeführt. Die Funktionen "Partikelfiltration" und "Wasserabscheidung" sind dabei getrennt und werden in zwei separaten Bauteilen realisiert.

Die Fig. 2 zeigt in Explosionsdarstellung einen Wasserabscheider 8, der ein im Wesentlichen zylindrisches Gehäuse 9 sowie ein darin einbringbares Einsatzelement 10 und ein Deckelteil 11 umfasst. Zwischen den Flanschen des Gehäuses 8 und des Deckelteils 11 wird zur Abdichtung ein O-Ring 12 angeordnet. Am Deckelteil 11 sind ein tangential zu einer vertikalen Längsachse L₁ des Gehäuses 8 verlaufender Eintrittskanal 13 für den Kraftstoff und ein koaxial zur Längsachse L₁ angeordneter Kraftstoffablauf 14 ausgebildet. Im gezeigten Beispiel sind das Deckelteil 11, der Eintrittskanal 13 und der Kraftstoffablauf einstückig ausgeführt.

Das Einsatzelement 10 umfasst ein zentrisches Rohrstück 15, an dessen oberen Ende ein kreisringförmiges Stützgitter 16 angeordnet ist, welches das Rohrstück 15 umgibt, und auf dem eine entsprechende Scheibe bzw. Lage 17 aus hydrophilem Material zu platzieren ist. Der Kraftstoffablauf 14 ragt innerhalb des Deckelteils 11 so weit nach unten, dass er mit dem oberen Ende des Rohrstücks 15 verbunden ist. Am unteren Ende des Rohrstücks 15 befindet sich ein tellerförmiges Leitelement 18. Das Rohrstück 15 weist in einem vertikal unterhalb des Stützgitters 16 und in einem Abstand zu diesem liegenden Bereich radiale Öffnungen 19 auf, die von einer Schicht oder Lage 20 aus einem hydrophoben Material überdeckt sind. Das untere Ende des Gehäuses 9 ist trichterförmig gestaltet, wobei an der tiefsten Stelle ein Wasserablassstutzen 21 angeordnet ist.

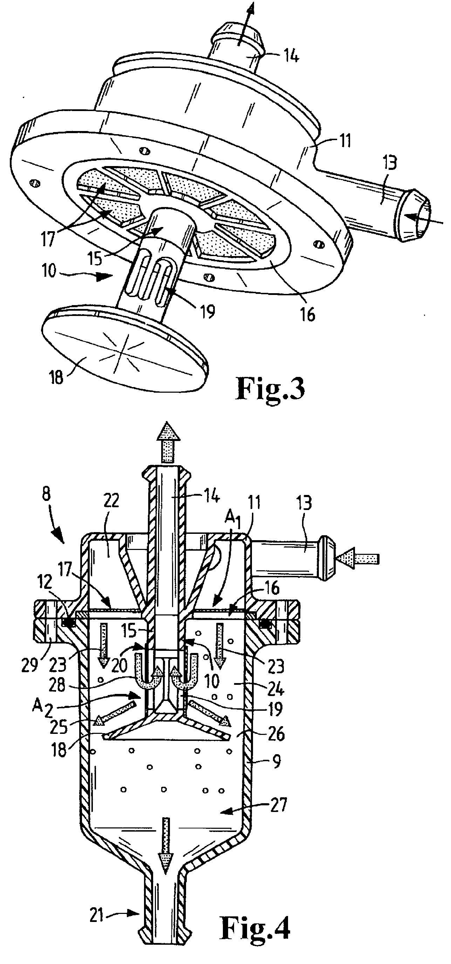

Fig. 3 zeigt das Deckelteil 11 mit dem Einsatzelement 10 in vergrößerter Darstellung. Daraus ist ersichtlich, dass das Rohrstück 15 über den Umfang verteilt mehrere radiale Öffnungen 19 besitzt, die vor der Montage der Baueinheit aus Einsatzelement 10 und Deckelteil 11 sowie dem Gehäuse 9 mit der aus Fig. 2 ersichtlichen Lage 20 oder mehreren Lagen aus hydrophobem Material versehen werden. Hierzu wird dieser Bereich des Rohrstücks 15 mit einem geeigneten Material, beispielsweise einem Siebgewebe aus Polyamid, umwickelt. Am unteren Ende des Rohrstücks 15 befindet sich das Leitelement 18 und am oberen Ende das Stützgitter 16, durch dessen Öffnungen die Lage 17 aus hydrophilem Material zu sehen ist. Am Deckelteil 11 befinden sich der Eintrittskanal 13 und der Kraftstoffablauf 14.

Die Fig. 4 zeigt einen Längsschnitt durch den Wasserabscheider 8 gemäß Fig. 2. Das Gehäuse 9 und das Deckelteil 11 sind an ihren jeweiligen Flanschen unter Zwischenfügung des O-Ringes 12 zusammengefügt und werden beispielsweise mittels nicht dargestellter Schrauben, die in entsprechende Bohrungen 29 gedreht werden, befestigt. Im Deckelteil 11 ist eine ringförmige Kraftstoffeintrittskammer 22 gebildet, in die der Eintrittskanal 13 mündet. Die Kraftstoffeintrittskammer 22 wird an ihrer Unterseite von der Lage 17 aus hydrophilem Material begrenzt, welche auf dem Stützgitter 16 des Einsatzelementes 10 liegt und somit die erste Abscheidestufe A₁ bildet. Der Kraftstoff mit den darin emulgierten Wasseranteilen tritt von der Kraftstoffeintrittskammer 22 durch die Lage 17 aus hydrophilem Material, das koaleszierend wirkt und somit Wassertropfen gebildet werden, die ebenso wie der Kraftstoff in Richtung der Pfeile 23 eine Strömungsrichtung senkrecht nach unten in die Abscheidekammer 24 haben. Aufgrund der größeren Masse werden die gebildeten Wassertropfen ihre Richtung beibehalten, wobei zusätzlich die auf sie wirkende Gravitationskraft mit dazu beiträgt, dass die Wassertropfen zum Leitelement 18 geführt werden und von dort gemäß den Pfeilen 25 zum Ringspalt 26 und durch diesen hindurch in den Sammelraum 27 gelangen. Der Ringspalt 26 ist groß genug, um die Wassertropfen in den Sammelraum 27 durchzulassen, im Übrigen wirkt das Leitelement 18 als Trennung zwischen der Abscheidekammer 24 und dem Sammelraum 27. An den Wasserablassstutzen 21 schließt sich ein in der Zeichnung nicht dargestelltes Ventil an, das nur zum Zweck des Ablassens von in dem Sammelraum 27 gesammeltem Wasser kurzzeitig geöffnet wird, im Übrigen aber geschlossen ist.

Der in der Abscheidekammer 24 im Wesentlichen von den Wasserbestandteilen getrennte Kraftstoff wird aufgrund der am Kraftstoffablauf 14 anliegenden Saugwirkung der Brennkraftmaschine durch die radialen Öffnungen 19 in das Rohrstück 15 bewegt, wie dies durch die Pfeile 28 gezeigt ist. Durch die Lage 20 aus hydrophobem Material, die eine zweite Abscheidestufe A₂ bildet, werden Wasseranteile, die trotz der Umlenkung des Kraftstoffs in Richtung auf die radialen Öffnungen noch mitgeführt werden, an der Lage 20 zurückgehalten, so dass ausschließlich Kraftstoffanteile durch die radialen Öffnungen 19 in das Innere des Rohrstücks 15 gelangen. Die an der Lage 20 zurückgehaltenen Wasseranteile werden ebenso wie die übrigen in der Abscheidekammer 24 befindlichen Wassertropfen durch den Ringspalt 26 in den Sammelraum 27 geführt.

## Patentansprüche

1. Kraftstoffzuführeinrichtung (1), insbesondere für eine Brennkraftmaschine (6), mit einem Partikelfilter und einem Wasserabscheider, wobei der Wasserabscheider (5, 8, 30) als ein dem Kraftstofffilter (4) nachgeordnetes separates Bauteil ausgebildet ist und eine erste Abscheidestufe (A₁) mit koaleszierendem Material sowie eine zweite Abscheidestufe (A₂) mit hydrophobem Material umfasst und die Abscheidestufen (A₁, A₂) derart angeordnet sind, dass zwischen diesen eine Umlenkung des Kraftstoffs erfolgt, wobei der Wasserabscheider (8) ein im Wesentlichen zylindrisches Gehäuse (9) umfasst, dessen Längsachse (L₁) mindestens annähernd vertikal verläuft und in dem Gehäuse (9) ein Einsatzelement (10) vorgesehen ist, das ein vertikales Rohrstück (15) umfasst, wobei die erste Abscheidestufe (A₁) mindestens eine Lage (17, 42) eines hydrophilen Mediums umfasst, wobei das Einsatzelement (10) ein kreisringförmiges Stützgitter (16) aufweist, wobei das Rohrstück (15) radiale Öffnungen (19) aufweist, und wobei die radialen Öffnungen (19) sich in einem vertikal unterhalb des Stützgitters (16) liegenden Bereich des Rohrstückes (15) befinden, **dadurch gekennzeichnet, dass** das hydrophile Medium im Wesentlichen horizontal angeordnet und darunter eine Abscheidekammer (24, 43) gebildet ist, wobei auf dem Stützgitter (16) das hydrophile Material der ersten Abscheidestufe (A₁) angeordnet ist, wobei die radialen Öffnungen (19) von dem hydrophoben Material der zweiten Abscheidestufe (A₂) überdeckt sind.

2. Kraftstoffzuführeinrichtung nach Anspruch 1, **dadurch gekennzeichnet, dass** die zweite Abscheidestufe (A₂) mindestens eine Lage (20, 47) eines hydrophoben Mediums umfasst.

3. Kraftstoffzuführeinrichtung nach Anspruch 2, **dadurch gekennzeichnet, dass** die mindestens eine Lage (20, 47) des hydrophoben Mediums geneigt oder im Wesentlichen vertikal angeordnet ist.

4. Kraftstoffzuführeinrichtung nach einem der Ansprüche 1 bis 3, **dadurch gekennzeichnet, dass** die Oberfläche des hydrophoben Mediums gewölbt ist.

5. Kraftstoffzuführeinrichtung nach einem der Ansprüche 1 bis 4, **dadurch gekennzeichnet, dass** die Umlenkung der Strömung des Kraftstoffs zwischen der ersten und zweiten Abscheidestufe (A₁, A₂) einen Winkel von 90° oder größer aufweist.

6. Kraftstoffzuführeinrichtung nach einem der Ansprüche 1 bis 5, **dadurch gekennzeichnet, dass** sich an das obere Ende des Rohrstückes (15) ein Kraftstoffablauf (14) anschließt, der in einem Deckelteil (11) ausgebildet ist.

7. Kraftstoffzuführeinrichtung nach Anspruch 6, **dadurch gekennzeichnet, dass** im Deckelteil (11) eine im Wesentlichen ringförmige Kraftstoffeintrittskammer (22) gebildet ist, in die ein Eintrittskanal (13) tangential mündet.

8. Kraftstoffzuführeinrichtung nach einem der Ansprüche 1 bis 7, **dadurch gekennzeichnet, dass** am unteren Ende des Rohrstückes (15) ein tellerförmiges Leitelement (18) angeordnet ist, dessen Außenumfang zur Innenwandung des Gehäuses (9) einen Abstand aufweist.

9. Kraftstoffzuführeinrichtung nach Anspruch 6 oder 7, **dadurch gekennzeichnet, dass** das Einsatzelement (10) und das Deckelteil (11) eine Baueinheit bilden.

## Claims

1. Fuel delivery device (1), in particular for an internal combustion engine (6), with a particle filter and a water separator, the water separator (5, 8, 30) being designed as separate component disposed downstream of the fuel filter (4) and comprising a first separating stage (A₁) with coalescent material as well as a second separating stage (A₂) with hydrophobic material and the separating stages (A₁, A₂) being arranged in such a way that the fuel is deviated between these two stages, the water separator (8) comprising a substantially cylindrical housing (9) whose longitudinal axis (L₁) extends at least approximately vertically and an insert element (10), which comprises a vertical pipe section (15), being provided in the housing (9), the first separating stage (A₁) comprising at least one layer (17, 42) of a hydrophilic medium, the insert element (10) featuring a circular ring-shaped support grid (16), the pipe section (15) featuring radial openings, and the radial openings (19) being positioned in an area of the pipe section (15) placed vertically underneath the support grid (18), **characterized in that** the hydrophilic medium is substantially disposed horizontally and that a separating chamber (24, 43) is formed thereunder, the hydrophilic material of the first separating stage (A₁) being disposed on the support grid (16), the radial openings (19) being covered by the hydrophobic material of the second separating stage (A₂).

2. Fuel delivery device according to claim 1, **characterized in that** the second separating stage (A₂) comprises at least one layer (20, 47) of a hydrophobic medium.

3. Fuel delivery device according to claim 2, **characterized in that** the at least one layer (20, 47) of the hydrophobic medium is inclined or disposed substantially vertically.

4. Fuel delivery device according to one of the claims 1 to 3, **characterized in that** the surface of the hydrophobic medium is curved.

5. Fuel delivery device according to one of the claims 1 to 4, **characterized in that** the deviation of the fuel flow between the first and the second separating stage (A₁, A₂) features an angle of 90° or larger.

6. Fuel delivery device according to one of the claims 1 to 5, **characterized in that** a fuel discharge (14), which is realized in a cover section (11), is connected to the upper end of the pipe section (15).

7. Fuel delivery device according to claim 6, **characterized in that** a substantially annular fuel intake chamber (22) is formed in the cover section (11) into which an intake channel (13) opens tangentially.

8. Fuel delivery device according to one of the claims 1 to 7, **characterized in that** a plate-shaped guiding element (18), whose outer periphery features a clearance from the inner wall of the housing (9), is disposed at the lower end of the pipe section (15).

9. Fuel delivery device according to claim 6 or 7, **characterized in that** the insert element (10) and the cover section (11) form a structural unit.

## Revendications

1. Dispositif d'alimentation en carburant (1), notamment pour un moteur à combustion interne (6), avec un filtre à particules et un séparateur d'eau, le séparateur d'eau (5, 8, 30) étant exécuté en tant que composant séparé placé en aval du filtre à carburant (4) et comprenant un premier niveau de séparation (A₁) avec un matériau coalescent et un deuxième niveau de séparation (A₂) avec un matériau hydrophobe, et les niveaux de séparation (A₁, A₂) étant disposés de telle manière que le carburant soit dévié entre ces deux niveaux, le séparateur d'eau (8) comprenant un boîtier (9) essentiellement cylindrique dont l'axe longitudinal (L₁) évoluant de manière au moins quasi verticale, et un élément d'insertion (10) comprenant un élément de tube (15) vertical étant prévu dans le boîtier (9), le premier niveau de séparation (A₁) étant pourvu d'au moins une couche (17, 42) d'un matériau hydrophile, l'élément d'insertion (10) présentant une grille de protection (16) de forme circulaire, l'élément de tube (15) comportant des ouvertures radiales et les ouvertures radiales (19) étant situées dans une zone de l'élément de tube (15) verticalement inférieure de la grille de protection (16), **caractérisé en ce que** le matériau hydrophile est essentiellement disposé en sens horizontal et qu'en dessous est formée une chambre de séparation (24, 43), le matériau hydrophile du premier niveau de séparation (A₁) étant disposé sur la grille de protection (16), les ouvertures radiales (19) étant recouvertes par le matériau hydrophobe du deuxième niveau de séparation (A₂).

2. Dispositif d'alimentation en carburant selon la revendication 1, **caractérisé en ce que** le deuxième niveau de séparation (A₂) comprend au moins une couche (20, 47) d'un matériau hydrophobe.

3. Dispositif d'alimentation en carburant selon la revendication 2, **caractérisé en ce que** la couche (20, 47), au moins au nombre d'une, de matériau hydrophobe est inclinée ou est essentiellement disposée à la verticale.

4. Dispositif d'alimentation en carburant selon l'une des revendications 1 à 3, **caractérisé en ce que** la surface du matériau hydrophobe est bombée.

5. Dispositif d'alimentation en carburant selon l'une des revendications 1 à 4, **caractérisé en ce que** la déviation du flux de carburant entre le premier et le deuxième niveau de séparation (A₁, A₂) forme un angle de 90° ou supérieur.

6. Dispositif d'alimentation en carburant selon l'une des revendications 1 à 5, **caractérisé en ce qu**'une sortie de carburant (14) formée dans une section de couvercle (11) est connectée à l'extrémité supérieure de l'élément de tube (15).

7. Dispositif d'alimentation en carburant selon la revendication 6, **caractérisé en ce qu**'une chambre d'entrée de carburant (22) essentiellement annulaire est formée dans la partie de couvercle (11), dans laquelle débouche en sens tangentiel un canal d'entrée (13).

8. Dispositif d'alimentation en carburant selon l'une des revendications 1 à 7, **caractérisé en ce qu**'un élément de guidage (18) en forme d'assiette et dont la circonférence extérieure est espacée de la paroi intérieure du boîtier (9) est disposé à l'extrémité inférieure de l'élément de tube (15).

9. Dispositif d'alimentation en carburant selon l'une des revendications 6 ou 7, **caractérisé en ce que** l'élément d'insertion (10) et le couvercle (11) forment un ensemble.
